Europäisches Patentamt

**European Patent Office**

Office européen des brevets

(19)

(11) Publication number: **O O1O 81O**
**B1**

(12) **EUROPEAN PATENT SPECIFICATION**

(45) Date of publication of patent specification: **27.07.83**

(51) Int. Cl.³: **A 23 F 5/12**

(21) Application number: **79200616.5**

(22) Date of filing: **25.10.79**

(54) Method of preparing a thin flaked roast and ground coffee.

(30) Priority: **06.11.78 US 958088**

(43) Date of publication of application:
**14.05.80 Bulletin 80/10**

(45) Publication of the grant of the patent:
**27.07.83 Bulletin 83/30**

(84) Designated Contracting States:
**BE DE FR GB IT NL**

(56) References cited:
**BE - A - 537 040**
**CH - A - 519 857**
**FR - A - 2 153 665**
**GB - A - 1 358 526**
**US - A - 3 625 704**
**US - A - 3 660 106**
**US - A - 3 769 031**

(73) Proprietor: **THE PROCTER & GAMBLE COMPANY**
**301 East Sixth Street**
**Cincinnati Ohio 45202 (US)**

(72) Inventor: **Bruce,Harry William,III**
**10104 Oakridge Drive**
**Overland Park, Kansas 66212 (US)**

(74) Representative: **Suslic, Lydia et al,**
**Procter & Gamble European Technical Center**
**Temselaan 100**
**B-1820 Strombeek-Bever (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Method of preparing a thin flaked roast and ground coffee

The present invention relates to a method of preparing thin-flaked roast and ground coffee product.

Numerous attempts have been made in the past to increase the extractability of roast coffee of those flavorful water-soluble constituents often referred to as brew solids. That is, attempts have been made to increase the amount of brew solids which are able to be extracted from a given weight of coffee from which a coffee brew is made.

It has long been known that the extractability of roast coffee could be increased by grinding the coffee to finer particle sizes. However, roast coffee products ground to very fine grinds have bed-permeability characteristics which inhibit the extraction of the water-soluble constituents due to bed compaction, pooling, channeling, etc. To avoid such brewing problems, it has been conventional to provide roast coffee ground to mixtures of variously sized particles, such as the traditional grinds of "regular", "drip" and "fine".

Other than adjusting the particle size distribution by grinding, relatively little effort has been directed toward altering the fundamental physical characteristics of coffee. Green coffee beans have been roll-milled prior to roasting and grinding to increase the extractability of coffee (see U.S.—A—2,123,207). Roast and ground coffee has been light-milled to provide a coffee product which has the same bulk appearance as conventional roast and ground coffee but which has increased extractability (see U.S.—A—3,769,031). Flaked green coffee has also been subjected to compressive and shear forces via extruder roasting to provide a roast coffee product which yields higher soluble solids (see, for example, U.S.—A—3,762,930). Although these efforts may result in some level of improvement in extracting desirable coffee flavor constituents, further enhancement of coffee's extractability is provided by flaked roast and ground coffee.

Roast and grouund coffee has been transformed into flaked coffee by roll milling the roast and ground coffee (see, for example, U.S.—A—1,903,362, and U.S.—A—2,368,113). Thick-flaked (i.e., flaked coffee having an average flake thickness greater than 0,2 mm (0.008 inch) roast and ground of enhanced extractability is disclosed in U.S.—A—3,615,667, as well as a method for its production in U.S.—A—3,660,106. A visually appealing high-sheen flaked roast and ground coffee of improved extractability is disclosed in U.S.—A—4,110,485.

In contrast to the consumer acceptability of thick-flaked roast and ground coffee, both the U.S.—A—3,615,667 patent and the U.S.—A—3,660,106 patent teach that thin-flaked coffee having an average flake thickness of less than 0.2 mm (0.008 inch) is taught to be consumer-unacceptable. The thin-flaked coffee produced by such prior art methods is described as having a "cellophane-like" nature and, therefore, visually unappealing. Moreover, the "cellophane-like" thin flakes are also disclosed as being undesirably fragile and have both an unacceptably low and a variable bulk density (U.S.—A—3,615,667, column 8, lines 46— 54).

The prior art teaches that the fragile nature of the thin flakes of the prior art leads to product breakup during normal packaging, transportation and handling. The product breakup is accompanied by the flakes aligning themselves in parallel planes producing a very compact product with a bulk density substantially higher than that of roast and ground coffees presently marketed. When the parallel plane alignment takes place after packaging, there occurs an objectionable increase in container outage (i.e. the space between the upper surface of the product and the upper surface of the container). Large container outages are viewed negatively by the consumer. Thus, the thin-flaked roast and ground coffee produced by art-known methods is consumerly unacceptable.

Given the state of the coffee art as described above, there is a continuing need to provide a roast and ground coffee product which provides improved extractability of soluble brew solids and which possesses consumerly acceptable physical properties and appearance. Accordingly, it is an object of the present invention to provide a method for preparing a roast and ground coffee product exhibiting desirable organoleptic and physical properties.

The methods known in the art for preparing flaked roast and ground coffee comprise passing roast and ground coffee through a roll mill under particular conditions of roll pressure, roll peripheral speed, roll temperature, roll diameters, and flake moisture content. While known methods of making flaked coffee have realized thick-flaked roast and ground coffee which provides an extractabilility advantage compared to conventional roast and ground coffee and possesses consumerly acceptable flake physical properties, these methods have been unable to produce thin-flaked roast and ground coffee exhibiting desirable properties.

Summary of the invention

The present invention provides a method of preparing an improved thin-flaked roast and ground coffee product having improved structural integrity and enhanced extractability for a less acidic beverage, the coffee product having a tamped bulk density of from 0.35 g/cc to 0.50 g/cc and a moisture content of from 2.5% to 9.0% by weight, the method comprising passing roast and ground coffee through a roll mill having rolls of a diameter of at least 15 cm and operating said roll mill at a roll peripheral speed of from 150 metres/min. to 800 metres/min, a roll temperature of below 40°C and a roll pressure of 100 kilonewtons/metre to 400 kilonewtons/metre of nip, characterized in that the roast and ground coffee has a particle size distribution such that

(a) from 90% to 100% by weight is retained on a No. 30 U.S. Standard Screen (0,595 mm sieve opening)

(b) from 51% to 89% by weight is retained on a No. 16 U.S. Standard Screen (1,19 mm sieve opening), and

(c) from 20% to 50% by weight is retained on a No. 12 U.S. Standard Screen (1.68 mm sieve opening),

and said roll mill is operated at a static gap setting of less than 0.1 mm, wherein said coffee product has a particle size distribution such that from 30% to 90% by weight thereof passes through a No. 30 U.S. Standard Sieve (0,595 mm sieve opening) and wherein said product comprises from 80% to 98% of roast and ground coffee flakes having a thickness of from 0.125 mm to 0.175 mm, said thickness being defined as the average thickness of flakes passing through a No. 12 U.S. Standard Sieve (1,68 mm sieve opening) and remaining on a No. 16 U.S. Standard Sieve (1,19 mm sieve opening).

Thin-flake coffee

In the provision of a thin-flaked roast and ground coffee product of enhanced extractability and low acidity, it is essential to control the flake thickness, particle size distribution, bulk density and flake moisture content in order to insure its consumer acceptability. Each of these coffee product properties, as well as product preparation and product use, are described in detail as follows:

A. Flake thickness

The improved coffee flaking process described hereinafter can provide flakes of almost any desired thickness. However, it has been suprisingly discovered that a flaked coffee product of superior increased extractability of the desirable coffee flavor constituents can be realized if the thickness of the coffee flakes are within a very select flake thickness range. The terms "coffee flakes" or "flaked coffee", as used interchangeably herein, refer to compressed roast and ground coffee. The term "flake thickness" as used herein means the average thickness of the flakes passing through a No. 12 U.S. Standard Sieve (1,68 mm sieve opening) and remaining on a No. 16 (1,19 mm sieve opening). The improved thin-flaked coffee product provided herein comprises flaked roast and ground coffee having a flake thickness ranging from 0.1 mm to 0.2 mm, preferably 0.125 to 0.175 mm. Such thin flakes provide improved extractability of the water-soluble coffee constituents compared to the thicker flaked coffee products disclosed by the prior art or commercially sold.

While not wishing to be bound by the proposed theory, it is believed that the increased extractability compared to prior art flaked coffee, particularly flaked coffee having a flake thickness exceeding 0.2 mm, is due to the increased internal cellular disruption of the thin coffee flakes made by the process of this invention. Although the prior art teaches that thicker coffee flakes have 70% to 85% of the coffee cells disrupted, as revealed by microscopic evaluation, such cellular disruption is evident only in the planar surface regions of the prior art flakes. Microscopic evaluation of a "cross-section" of such thicker coffee flakes surprisingly reveals that the cellular disruption indicated is confined to the regions near the surface of the flake plane. A cross-section of the thin-flaked coffee of the present invention, however, reveals that substantially all, i.e. from 50% to almost 100%, of the cells exposed from a cross-section view of the thin flakes of the present invention are disrupted. That is, the cellular disruption speculated to be responsible for increased extractability is not confined to the surface regions of the flake. The cellular disruption of the interior of the thin-flaked coffee herein is believed caused by the particular combination of conditions herein disclosed, including a more severe compressive force required to transform the relatively large "coarse" grind size roast and ground coffee feed into the thinner thin-flaked coffee of the present invention, as explained in more detail below.

The greater extractability provided by the novel thin-flaked coffee provided herein enables more cups of equal-brew strength and flavor to be brewed from a given amount of coffee. The normal method of measuring the strength of a coffee brew is to measure the percent soluble solids which is more commonly referred to as brew solids. This measurement can be made by oven-drying the brewed coffee and weighing the remainder. The percent soluble solids can also be ascertained optically by measuring the index of refraction of the coffee brew. The index of refraction is correlated to brew solids as measured by the oven-drying technique. Although the extractability of acidity constituents is also increased, it has been surprisingly found that the increase is proportionately smaller than the increase in flavor constituents. Therefore, not only could more cups of equal-brew strength be brewed from a given amount of thin-flaked coffee, but the equal-brew strength cups would also have lower acidity which is often described in terms of bitterness.

The thin-flaked coffee provided herein can be made from a variety of roast and ground coffee blends including those which may be classified for convenience and simplification as low-grade, intermediate grade and high-grade coffees. Examples and blends thereof are known in the art and illustrated in, for example, U.S.—A—Patent 3,615,667 incorporated herein by reference in its entirety.

Decaffeinated roast and ground coffee can also be used herein to make a decaffeinated thin-flaked coffee product. As is known in the art, the removal of caffeine from coffee products frequently is accomplished at the expense of the removal of certain other desirable components which contribute to flavor. The tendency of decaffeinated products to be either weak or deficient in flavor has, thus, been reported in the literature. The provision of thin-flaked coffee made from decaffeinated roast and ground coffee by the novel thin-flaking method of the present invention provides a compensatory advantage. The added flavor and strength advantages achievable by enhanced extractability permits realization of levels of flavor and brew strength which might otherwise not be attainable in the case of a conventional decaffeinated roast and ground product.

Typically, decaffeination of coffee is accomplished by solvent extraction prior to the roasting of green coffee beans. Such decaffeination methods are well known in the art. After roasting, the decaffeinated beans are ground to the suitable particle size, described in more detail below, and are thereafter roll-milled according to the method of the present invention which is also described in more detail below.

B. Particle size distribution of the thin-flaked coffee product

As noted above, the thin-flaked coffee provided herein has a flake thickness within a select, very particular thickness range. It is also important to control the dimension which characterizes the particle size of the coffee flakes. It is conventional in the coffee art to describe coffee particle size distribution, including flaked coffee, in terms of sieve fractions, i.e. that weight percentage which remains on a particular sieve or that weight percentage which passes through a particular sieve.

It has been found that coffee products comprising 60% or more of fine particles experience decreased extractability which drops dramatically as the average particle size decreases. The thin-flaked coffee products of the invention should have no more than 90% by weight passing through a No. 30 U.S. Standard screen, (0,595 mm sieve opening) and preferably from 40% to 70% passing through a No. 30 U.S. Standard screen (0,595 mm sieve opening). This particle size distribution insures efficient extraction.

C. Bulk density of the thin-flaked coffee product

The thin-flaked coffee product of the present development should have a bulk density of from 0.35 g/cc to 0.50 g/cc preferably 0.38 to 0.48 g/cc in order to assure proper performance. Fortunately, the present invention provides flakes of high structural integrity. The desirability of flakes of high structural integrity (i.e. physical strength and resistance to attrition or breakage during handling) is important because large percentages of broken flakes markedly change the product bulk density and particle size distribution, which in turn adversely affect the brewing properties of the product.

D. Flake moisture content

The thin-flake coffee composition disclosed herein has, on the average, a flake moisture level of from 2.5% to 9.0% by weight, preferably from 3.5% to 7.0%, and most preferably 3.5% to 5.0%. Of course, it is recognized that individual flakes can have different individual moisture contents. However, the weight percentages of such flakes should be controlled such that the coffee product as a whole has an average moisture content within the above-given range. Moisture contents lower than 2.5% are to be avoided because the resulting flakes are very fragile and often break during process handling and packing. Too large a percentage of broken flakes in turn changes the product bulk density which if it falls without the range of from 0.35 g/cc to 0.50 g/cc and, as noted above, will produce a consumer-unacceptable product. On the other hand, moisture contents above 7.0% are less desirable.

Typically, flake moisture content is adjusted by varying the moisture level of the roast and ground coffee feed from which the flakes are produced. The adjustments to the feed moisture level can be controlled, for example, by controlling the amount of water used to quench and to thereby halt the exothermic roasting operation. The moisture content of the roasted beans is not appreciably affected by grinding or even by the flaking operations unless high roll surface temperatures are used.

E. Aroma-enriched, thin-flaked coffee

Penalty exacted by the flaking operation is the loss of aroma constituents usually associated with fresh roast and ground coffee. This relative deficiency in the aromas characteristic of fresh roast and ground coffee has been attributed to the loss of aroma principles during the roll milling of roast and ground coffee into flakes. Accordingly, it may be optionally desirable to aroma-enrich the thin-flaked coffee product of the present invention so as to restore or enhance the aroma to approximate that of fresh roast and ground coffee.

A variety of methods are known in the art for providing coffee products with coffee aromas, for example, U.S.—A—Patents 2,947,634, 3,148,070 and 3,769,032 each of which is incorporated herein by reference in its entirety.

These patents describe methods for aromatizing soluble powders by addition of an edible carrier oil, such as coffee oil, triglyceride vegetable oil, propylene glycol and carrying volatile coffee aromas. Aroma-enriched carrier oil is generally prepared by mixing the carrier oil with an aroma frost, allowing the mixture to equilibrate and allowing the mixture to liquify. An aroma frost can be obtained by the condensation of the aroma constituents from a variety of sources. Suitable examples of aromatizing coffee volatiles are those obtained from roaster and grinder gases and from the condensation of steam-distilled volatile aromas. Examples of suitable aroma materials are described in said U.S.—A—patents 2,947,634, 3,148,070, 2,562,206, 3,132,947, 3,615,665 and U.S.—A—3,997,683.

Preparation of thin-flaked coffee

The thin-flaked roast and ground coffee of the present invention can be formed by subjecting conventional roast and ground coffee to the compressive pressures of a roll mill. The roast and ground coffee is first passed through the roll mill which comprises a pair of parallel, smooth or highly polished rolls which crush and flatten the coffee into flakes. Thereafter, the flaked coffee so produced is sized by suitable means to achieve the requisite particle size distribution.

A. Roll milling

In the step of roll milling roast and ground coffee to produce consumer-acceptable flaked coffee, it has been found important to control at least several processing variables: particle size distribution, roll pressure, roll surface temperature, static gap, roast and ground feed moisture content, feed rate, roll peripheral surface speed, and roll diameters. These and other processing variables are described in detail hereinafter.

1. Particle size distribution of roast and ground coffee feed

In marked contrast to the teachings of the art, the particle size distribution of the roast and ground coffee feed has been surprisingly discovered to be a most important process variable in the production of thin-flaked coffee of higher extractability. Prior art processes have utilized grind sizes traditionally referred to as "regular", "drip" and "fine". The standards of these grinds, as suggested in the 1948 "Coffee Grinds: Simplified Practice Recommendation R231—48", published by the Coffee Brewing Institute Inc., New York, incorporated herein by reference in its entirety.

It has been found, however, that only larger "coarse" grind size particles are suitable in the novel method of making the thin-flaked coffee disclosed herein. The term "coarse" grind is used liberally in the coffee art to characterize grinds of widely varying particle size distributions. As used herein, "coarse" grind size indicates that the roast and ground coffee has a particle size distribution such that:

(a) from 90% to 100% by weight is retained on a No. 30 U.S. Standard Sieve, (0,595 mm sieve opening)

(b) from 51% to 89% by weight is retained on a No. 16 U.S. Standard Sieve, (1,19 mm sieve opening), and

(c) from 20% to 50% by weight is retained on a No. 12 U.S. Standard Sieve (1,68 mm sieve opening).

The extractability advantage for flaked coffee prepared by utilizing a "coarse" size grind feed to the roll milling operation decreases rapidly as flake thickness increases beyond 0.20 mm. Stated differently, as flake thickness increases, the particle size of the feed to the roll mill becomes less significant in increasing the extractability of flaked coffee.

Typical grinding equipment and methods for grinding roasted coffee beans are described in detail in, for example, Sivetz & Foote, "Coffee Processing Technology", 1963, Vol. 1, pp. 239—250, incorporated herein by reference.

2. Roll pressure or force

Roll pressure will also influence the nature of the roast and ground coffee flakes obtained by the process of the present invention. Roll pressure is measured in pounds per inch of nip. In metric units it is measured in kilonewtons/meter of nip. Nip is a term used in the art to define the length of surface contact between two rolls when the rolls are at rest. To illustrate, it can be thought of as a line extending the full length of two cylindrical rolls and defining the point or line of contact between two rolls.

To produce thin-flaked roast and ground coffee of high extractability and in high yield, the roll mill should be operated at a static gap setting of less than 0.1 mm, a roll peripheral speed of from 150 meters/min to 800 meters/min., a roll surface temperature of below 40°C, and at a pressure of 100 kilonewtons/meter to 400 kilonewtons/meter of nip, and wherein the rolls of said mill have a roll diameter of at least 15 cm. In general, operable feed rates are directly related to the roll pressure. Thus, higher roll pressure allows a higher feed rate to the roll mill to produce a flake of specific thickness for otherwise equivalent operating conditions of the roll. The disadvantages of using higher roll pressures are simply mechanical, e.g. more expensive equipment is needed to produce higher roll pressures. Conversely, at low roll pressures, the feed rate can drop below commercially desirable rates.

3. Roll surface temperature

Control of the surface temperature of each roll has been found to be important to the provision of thin-flaked roast and ground coffee of high extractability. Roll surface temperature refers to the average surface temperature of each roll of the roll mill. The rolls can be operated at differential operating temperatures. However, operation under conditions of differential roll temperatures is not preferred.

The surface temperature of each of the respective rolls can be controlled by a heat exchange fluid passing through the inner core of the rolls. Generally, the fluid, which is most often water, is heated or cooled and passed through the inside of the rolls. The result is that the roll surface which is usually a smooth, highly polished steel surface, is subjected to temperature control by means of heat transfer. Of course, in actual operation the surface temperature will not be exactly the same as the temperature of the heat exchange fluid and will be somewhat higher because milling of coffee particles to produce flakes tends to increase the roll surface temperature. Accordingly, determination of the temperature of the exchange fluid necessary to maintain any specific roll surface temperature will depend upon several factors, such as the kind of metal the roll is made of, the roll wall thickness, the speed of operation of the roll mills, and the nature of the heat exchange fluid employed.

To produce the thin-flaked roast and ground coffee of the present invention, it is essential that the roll surface temperature be less than 40°C, preferably between 5°C to 30°C.

4. Static gap

As used herein, the term "static gap" represents that distance separating the two roll mills along the line of nip while at rest and is typically measured in mils. A special condition of roll spacing is "zero static gap" which is used herein to indicate that the two rolls are in actual contact with each other along the line of nip when the roll mills are at rest. As roast and ground coffee is fed into the roll mills and drawn through the nip, it causes the rolls to deflect an amount which is dependent upon the roll peripheral speed, roll pressure, and coffee feed rate. Accordingly, the thin-flaked coffee of the present invention can be made even when the roll mills are set at zero static gap. Because of the deflecting action of the coffee feed as it passes through the roll mill, the static gap setting must be less than the desired flake thickness. The static gap settings range from 0 (i.e. from a zero gap setting) up to 0.1 mm.

In the most preferred method of practice, a zero static gap spacing of the roll mills is employed. Differential roll peripheral surface speeds are to be strictly avoided when the roll mills are set for zero static gap operation. Contact along the line of nip between rolls operating at differential peripheral surface speeds can cause severe physical damage to the roll mill. Differential roll peripheral surface speeds can be utilized, however with static gap spacings exceeding 0.05 mm.

5. Moisture content

In producing consumer-acceptable flaked roast and ground coffee, it is essential that the average flake moisture content be from 2.5% to 9.0% by weight, with 3.5% to 7.0% being preferred. Since the moisture level of the coffee particles is not significantly affected by the flaking operation, the moisture level of the thin-flaked coffee product herein can be controlled by controlling the moisture content of the roast and ground coffee feed. Consequently, the average moisture content of the roast and ground coffee particles to be flaked should be within the range of from 2.5% to 9.0%. Flaked roast and ground coffee particles having lower moisture levels tend to be more brittle, which leads to the production of an undesirably high level of fines.

6. Feed rate

The feed rate to the roll mill is that amount of material per hour per meter of nip which is fed into the nip area. The throughput rate is the amount of material per hour per meter of nip that actually passes through the roll mill. When the feed rate exceeds the throughput rate, a condition occurs which is referred to in the art as "choke feeding". Conversely, when the feed rate falls below the theoretical throughput rate, the feed rate and throughput rate are the same. This condition is referred to in the art as "starve feeding". Starve feeding offers the particular process advantages such as increased process control, increased equipment life, and increased process flexibility and is, therefore, the more suitable mode of operation in the method of the present invention.

7. Roll peripheral surface speed

Control of the peripheral surface speeds of the rolls has also been found to be important to the provision of the thin-flaked roast and ground coffee herein. The roll peripheral surface speed is measured in meters per minute of roll surface circumference which passes by the nip. Generally, the roll mill should be operated at a roll speed of from 150 meters/min to 800 meters/min., preferably from 200 meters/min to 700 meters/min.

For a given set of roll mill operating conditions, the throughput rate, the roll peripheral surface speed and the thickness of the flaked coffee produced are closely related. In the production of flaked coffee of a specified thickness, the throughput rate is directly related to the roll peripheral surface speed. Thus, an increase in the roll peripheral surface speed allows an increase in the throughput rate in producing flakes of specified thickness. When a constant throughput rate is maintained (e.g. by controlling the feed rate), higher roll peripheral surface speeds produce thinner flakes and conversely, lower roll peripheral surface speeds produce thicker flakes. If the throughput rate is increased, the roll peripheral surface speed must be increased to maintain the production of flakes of a desired thickness.

While peripheral surface roll speeds have been set forth in connection with operation of a roll mill to provide thin-flaked coffee of improved extractability, it will be appreciated that optimal speeds will be determined in part by the other roll mill conditions, such as the size of the rolls employed, the static gap setting, etc., as well as the physical and organoleptic properties desired in the flaked product.

8. Roll diameters

The process of the present invention can be practiced with the aid of any of a variety of roll mills of various roll diameters capable of subjecting roast and ground coffee to mechanical compressing action and adapted to the adjustment of roll pressure, roll speed and roll temperature. Suitable mills are those having two parallel rolls so that coffee particles passed between the rolls are crushed or flattened into flakes. Normally, smooth or highly polished rolls will be employed as they permit ready cleaning; other rolls can, however, be employed if the desired flaking effects can be obtained.

In the selection of suitable roll mill equipment attention should be given to the diameters of rolls. Roll mills having a diameter of less than 15 cm tend to hamper passage of the coffee through the mill by a churning effect which decreases throughput and efficiency. If available, roll mills of even as high as 122 cm in diameter should be suitable. However, good results are obtained from mills having diameters in the range of from 15 to 76 cm. Examples of suitable mills which can be adapted in known manner to operation within the parameters defined hereinbefore include any of the well-known and commercially available roll mills, such as those sold under the tradenames of Lehmann, Thropp, Ross, Farrell and Lauhoff.

B. Screening

After the roast and ground coffee feed has been flaked by being passed through the roll mill, it is essential that the thin-flaked coffee produced goes through a sizing operation so as to insure that the thin-flaked coffee product has a particle size distribution as described below. Impurities in the roast and ground coffee feed to the roll mill typically produce oversized flakes which can be readily removed by the sizing operation. And too, since operation of the roll mill within the parameter ranges given above can result in a secondary grinder effect, the sizing operation can serve to remove an undesirable level of fine particles.

A wide variety of suitable sizing methods and apparatus are known in the art (see, for example, "Perry's Handbook for Chemical Engineers", McGraw-Hill Book Co., pp. 21—46 to 21—52, incorporated herein by reference). For example, the thin-flake coffee can be effectively screen-sized by dropping the thin-flaked coffee particles from a hopper, chute or other feeding device into a mechanically vibrating screen or into a multiple sieve shaker such as those marketed by Newark Wire Cloth Company and the W. S. Tyler Company. Typically, the sizing operation separates the flaked coffee of various particle sizes into desired size fractions in less than one minute. Such equipment typically have exit or drawoff ports which allow the withdrawal of oversize or plus material. Such drawoff parts also allow withdrawal of fines (i.e. through a No. 30 U.S. Standard Sieve=0,595 mm sieve opening) so as to achieve a sieve analysis or particle size distribution such that a thin-flaked coffee product is produced such that 30% to 90% by weight passes through a No. 30 U.S. Standard Sieve (0,595 mm sieve opening).

The following examples are offered to further illustrate the invention disclosed herein.

Example 1

Seventy pounds of a blend comprising 30% high quality Arabicas, 30% Brazils, and 40% Robustas are roasted in a Probat/Jubilee roaster to endpoint temperatures within the range of from 230°C to 260°C in 12 min total roast time. The roasted beans are quenched with 6.75 liters of water. The roast coffee is then halved into two portions. One half is used for a control production of thick-flaked roast and ground coffee, while the remaining half is utilized for the production of thin-flaked roast and ground coffee.

Portions of the above-blended roast coffee beans are ground coarser than a regular grind size in a Gump pilot griner. A sample of the ground coffee is taken for analysis. A sieve screen analysis indicates that 30% by weight remains on a No. 12 U.S. Standard sieve (1,68 mm sieve opening), 70% by weight is retained on a No. 16 U.S. Standard sieve (1,19 mm sieve opening), while 85% by weight remains on a No. 20 U.S. Standard sieve (0,841 mm sieve opening) and 95% by weight remains on a No. 30 U.S. Standard sieve (0,595 mm sieve opening). The moisture level is 4.4% by weight. The coarse grind size roast and ground coffee is starve-fed by dropping a cascade of the particles into the rolls of a "Ross" two-roll mill set at zero static gap, each roll being of 46 cm diameter. The feed rate is 575 kg/meter of nip per hour, while the roll pressure is adjusted to provide a pressure of 250 kilonewtons/meter of nip. Each roll is operated at a peripheral surface speed of 300 meters per minute and at an average roll surface temperature of 16°C. The thin-flaked coffee particles dropping from between the rolls are gravity-fed into a hopper. The result sieve analysis is: 50% passes through a No. 30 U.S. Standard sieve (0,595 mm sieve opening). The product had a bulk density of .44 g/cc and a moisture level of 4.4% by weight.

The flaked coffee product is characterized by an average flake thickness of 0.16 mm in the following manner: 100 grams of the thin-flaked coffee is poured onto U.S. Standard No. 12 (1,68 mm sieve opening) circular sieve and is agitated by a "Ro-Tap" sieve shaker (manufacutred by U.S. Tyler Co.) for three minutes. The thin-flaked coffee which passes through the No. 12 sieve (1,68 mm sieve opening) is thereafter similarly screened using a U.S. Standard sieve No. 16 (1,19 mm sieve opening). From the portion remaining on the No. 16 sieve, (1,19 mm sieve opening) ten (10) representative flakes from the portion remaining on the No. 16 sieve (1,19 mm sieve opening) are selected for flake thickness measurement. Each representative thin-flake particles are measured for thickness using a Starrett Model 1010 gauge manufactured by L. S. Starrett Co. The ten-flake thickness measurements are averaged to characterize the average flake thickness.

The thin-flaked coffee product prepared in the above-described manner exhibits increased extractability of the water-soluble constituents and produces a coffee brew characterized by lower acidity.

Control process 1

The second half of the roast portion referred to hereinbefore was ground to a "regular" grind particle size and was made into thick flakes by a control process utilizing the roll mill described in Example I, except that each roll was adjusted to a static gap setting of 0.75 mm, to the peripheral surface speed of 30 meters per minute, and to a roll surface temperature of 21°C. Starve feeding at a rate of 1700 kg per hour per meter of nip and a roll pressure of 175 kilonewtons per meter of nip is employed. The thick-flaked coffee that is removed from the roll mill is characterized by a thickness of 0.38 mm. This product corresponds to a prior art flaked coffee product made in accordance with the process disclosed in U.S.—A—3,615,667 (=CH—A—519857)

Control process 2

Some thin-flaked coffee is made using a prior art flaking method, as follows:

Three hundred pounds of a blend comprising 30% high quality Arabicas, 30% Brazils and 40% Robustas are roasted in a Thermalo roaster to endpoint temperature within the range of 230°C—260°C in 10 minutes total roast time. The roasted beans are quenched with 29.5 liters of water.

The roast coffee is ground to a "regular" grind particle size and made as described in U.S.—A—3,660,106.

Each roll was adjusted to zero static gap, to the peripheral surface speed of 120 meters per minute, and to a roll surface temperature of 65°C. Starve feeding at a rate of 1340 kg per hour per meter of nip and a roll pressure of 250 kilonewtons per meter of nip is employed. The thin-flaked coffee particles dropping from between the rolls are gravity-fed into a hopper. The resultant sieve analysis is: 20% by weight passes through a 30 mesh U.S. Standard sieve. The product has a bulk density of .42 gm/cc and a moisture level of 6.1% by weight. The thin-flaked coffee product is characterized by an average flake thickness of 0.21 mm.

Microscope evaluation test

Samples of the flakes from Example 1 and Control Process 1 were microscopically viewed and photographed to determine and compare the degree of cellular disruption.

Embedding procedure for coffee sections

For each sample received, 10—15 flakes of coffee are placed in each of two small round plastic vials, 15 mm in diameter and 8.5 mm in height. Epoxy is then added to the vials, to the upper edge. The composition of the epoxy is:

26 grams—Nonenyl Succinic Anhydride™
10 grams—Bakelite Epoxy Resin ERL—4206™
8 grams—Epoxy Resin DER—736™
0.4 grams—Dimethylaminoethanol

If the coffee pieces float to the surface of the epoxy, the vials are placed in a vacuum of 30 mm of mercury absolute pressure for approximately 5 minutes. If the pieces do not sink when the vacuum is released, the procedure is repeated until they do.

The vials are then held at 70°C overnight (~16 hours) to cure (harden) the epoxy. After curing, the plastic vial is cut away from each block, and the blocks are mounted in a hand-operated microtome. The microtome is set to cut sections 15 $\mu$m thick. Sections are cut from both blocks for each sample and mounted in mineral oil in glass slides for examination and photographs.

The sections are examined and photographed on a "Zeiss Universal" Microscope equipped with a 35 mm camera using Kodachrome II Professional color film. The thin coffee flakes of Example I of the present invention had from 50% to 100% of their microscopic observable internal and surface cells disrupted. However, the coffee flakes of Control Process 1 had from up to 100% of their cells in the planar surface regions disrupted—their internal cells were somewhat distorted but a majority of those cells were observably undisrupted. Disruption as used herein means that a cell wall is observably fractured or substantially unidentifiable as cells at magnification of 35×.

Extraction tests

The enhanced extractability of the thin-flaked coffee of the present invention compared with prior art coffees as a reference is demonstrated by the following procedure: A drip coffee extraction is performed by charging 57.0 g of coffee to a Bunn 0L20 12-cup coffee maker and. allowing the coffee to be drip brewed. The brew is cooled to room temperatures and analyzed for solids content by index of refraction. The drip extraction is performed on (1) the invention, the thin-flaked roast and ground coffee product of Example I, (2) the thick-flaked coffee product of Control Process 1 and (3) a prior art thin-flaked coffee (Control Process 2). The results of such extraction tests are set forth in the following Table 1.

TABLE 1

| Coffee | Brew solids wt./% | Titratable acidity ml/g brew solids |
|---|---|---|
| 1. Example I (Invention) | 0.88 | 4.9 |
| 2. Control process 1 | 0.79 | 5.4 |
| 3. Control process 2 | 0.82 | 5.2 |

As is apparent from an inspection of the data in Table 1, the thin-flaked coffee of this invention, Coffee 1, provided a substantially higher extractability of brew solids and a substantially lower titratable acidity as compared with the prior art flaked coffees 2 and 3.

## Claim

A method of preparing an improved thin-flaked roast and ground coffee product having improved structural integrity and enhanced extractability for a less acidic beverage, the coffee product having a tamped bulk density of from 0.35 g/cc to 0.50 g/cc and a moisture content of from 2.5% to 9.0% by weight, the method comprising passing roast and ground coffee through a roll mill having rolls of a diameter of at least 15 cm and operating said roll mill at a roll peripheral speed of from 150 meters/min to 800 metres/min, a roll temperature of below 40°C and a roll pressure of 100 kilonewtons/metre to 400 kilonewtons/metre of nip, characterized in that the roast and ground coffee has a particle size distribution such that

(a) from 90% to 100% by weight is retained on a No. 30 U.S. Standard Screen (0,595 mm sieve opening),
(b) from 51% to 89% by weight is retained on a No. 16 U.S. Standard Screen (1,19 mm sieve opening), and
(c) from 20% to 50% by weight is retained on a No. 12 U.S. Standard Screen (1,68 mm sieve opening),

and said roll mill is operated at a static gap setting of less than 0.1 mm, wherein said coffee product has a particle size distribution such that from 30% to 90% by weight thereof passes through a No. 30 U.S. Standard Sieve (0,595 mm sieve opening), and wherein said product comprises from 80% to 98% of roast and ground coffee flakes having a thickness of from 0.125 mm to 0.175 mm, said thickness being defined as the average thickness of flakes passing through a No. 12 U.S. Standard Sieve (1,68 mm sieve opening) and remaining on a No. 16 U.S. Standard Sieve (1,19 mm sieve opening).

## Patentanspruch

Ein Verfahren zur Herstellung eines verbesserten, dünn geflockten, gerösteten und gemahlenen Kaffeeproduktes mit verbesserter struktureller Integrität und erhöhter Extrahierbarkeit für ein weniger saures Getränk, wobei das Kaffeeprodukt eine gestampfte Schüttdichte von 0,35 g/cm³ bis 0,50 g/cm³ und einen Feuchtigkeitsgehalt von 2,5 bis 9,0 Gew.-% aufweist und das Verfahren die Leitung von geröstetem und gemahlenem Kaffee durch eine Walzenmühle mit Walzen eines Durchmessers von mindestens 15 cm und das Betreiben dieser Walzenmühle bei einer Walzenumfangsgeschwindigkeit von 150 m/Min. bis 800 m/Min., einer Walzentemperatur unterhalb 40°C und einem Walzendruch von 100 Kilonewton/m bis 400 Kilonewton/m Walzenspalt umfaßt, dadurch gekennzeichnet, daß der geröstete und gemahlene Kaffee eine solche Teilchengrößenverteilung hat, daß

(a) 90 bis 100 Gew.-% auf einem US-Standardsieb Nr. 30 (Sieböffnung 0,595 mm) zurückgehalten werden,
(b) 51 bis 89 Gew.-% auf einem US-Standardsieb Nr. 16 (Sieböffnung 1,19 mm) zurückgehalten werden und
(c) 20 bis 50 Gew.-% auf einem US-Standardsieb Nr. 12 (Sieböffnung 1,68 mm) zurückgehalten werden, und diese Walzenmühle bei einer statischen Spalteinstellung von weniger als 0,1 mm betrieben wird, wobei dieses Kaffeeprodukt eine solche Teilchengrößenverteilung aufweist, daß 30 bis 90 Gew.-% davon durch ein US-Standardsieb Nr. 30 (Sieböffnung 0,595 mm) hindurchfallen, und wobei dieses Produkt 80 bis 98% an gerösteten und gemahlenen Kaffeeflocken mit einer Stärke von 0,125 mm bis 0,175 mm umfaßt, wobei diese Stärke als die durchschnittliche Stärke von Flocken, die durch ein US-Standardsieb Nr. 12 (Sieböffnung 1,68 mm) hindurchgehen und auf einem US-Standardsieb Nr. 16 (Sieböffnung 1,19 mm) zurückbleiben, definiert wird.

## Revendication

Procédé de préparation d'un produit perfectionné à base de café grillé et moulu en paillettes ayant une intégrité de structure améliorée et une plus grande possibilité d'extraction pour donner une boisson moins acide, le produit à base de café ayant une masse volumique apparente, après tassement, de 0,35 g/cm³ à 0,50 g/cm³ et une teneur en humidité de 2,5% à 9,0% en poids, le procédé comprenant le passage du café grillé et moulu à travers un broyeur à cylindres ayant des cylindres d'un diamètre d'au moins 15 cm, et le fonctionnement de ce broyeur à cylindres a une vitesse périphérique des cylindres de 150 m/min à 800 m/min, une température de cylindres inférieure à 40°C et une pression des cylindres de 100 kN/m à 400 kN/m de zone de pincement, procédé caractérisé en ce que le café grillé et moulu présente une distribution de la dimension des particules telle que:

(a) 90% à 100% en poids sont retenus sur un tamis U.S. Standard n° 30 (ouverture de mailles de 0,595 mm),

(b) 51% à 89% en poids sont retenus sur un tamis U.S. Standard n° 16 (1,19 mm d'ouverture de maille), et

(c) 20% à 50% en poids sont retenus sur un tamis U.S. Standard n° 12 (1,68 mm d'ouverture de maille),

et en ce que l'on fait fonctionner ledit broyeur à cylindres avec un réglage de l'intervalle statique inférieur à 0,1 mm; le produit à base de café présentant une distribution des dimensions de particules telle que 30% à 90% en poids dudit produit traversent un tamis U.S. Standard n° 30 (0,595 mm d'ouverture de maille); et en ce que ledit produit comprend de 80% à 98% de paillettes de café grillé et moulu ayant une épaisseur de 0,125 mm à 0,175 mm, ladite épaisseur étant définie comme l'epaisseur moyenne des paillettes passant à travers un tamis U.S. Standard n° 12 (1,68 mm d'ouverture de maille) et restant sur un tamis U.S. Standard n° 16 (1,19 mm d'ouverture de maille).